# EUROPÄISCHE PATENTSCHRIFT

(11) **EP 4 146 965 B1**
(45) Veröffentlichungstag und Bekanntmachung des Hinweises auf die Patenterteilung: **04.09.2024**
(21) Anmeldenummer: 21726344.1
(22) Anmeldetag: 06.05.2021
(51) Int. Cl.: F16K 31/05, F16K 31/50, F16K 37/00, F15B 1/02, F03G 1/02, F16H 25/20, G05G 15/00, F02D 41/22

(54) **STELLANTRIEB UND KORRESPONDIERENDES VERFAHREN**
ACTUATOR AND CORRESPONDING METHOD
MÉCANISME DE COMMANDE ET PROCÉDÉ CORRESPONDANT

(30) Priorität: 08.05.2020 DE 102020112548
(43) Veröffentlichungstag der Anmeldung: 15.03.2023
(73) Patentinhaber: AUMA Riester GmbH & Co. KG, 79379 Müllheim (DE)
(72) Erfinder: TRITSCHLER, Matthias, 79258 Hartheim (DE); MALUS, Peter, 79379 Müllheim (DE); STÖCKLIN, Lutz, 79367 Weisweil (DE); KOCH, Guido, 79149 Karlsuhe (DE)
(74) Vertreter: Mertzlufft-Paufler, Cornelius
(86) Internationale Anmeldenummer: PCT/EP2021/062081
(87) Internationale Veröffentlichungsnummer: WO 2021/224433

(56) Entgegenhaltungen:
- DE-A1- 102009 022 700
- DE-A1- 102010 007 137
- DE-A1- 3 840 125
- US-A1- 2007 075 285
- US-A1- 2016 273 561
- US-B1- 9 114 798

## Beschreibung

Die Erfindung betrifft Stellantrieb mit einem Motor und einem von dem Motor antreibbaren und mit einer Armatur koppelbaren Abtrieb sowie mit einem Notantrieb mit einem Energiespeicher, durch den der Abtrieb alternativ zum Motor antreibbar ist.

Die Erfindung betrifft weiter ein Verfahren zum Aufladen eines Energiespeichers eines Stellantriebs.

Es ist bekannt, Stellantriebe, die zum Anschluss an eine Armatur und zur Betätigung der Armatur eingerichtet sein können, mit einem Notantrieb auszustatten, um bei einer Unterbrechung einer primären Energieversorgung, beispielsweise einem Stromausfall, die jeweils angeschlossene Armatur in eine definierte Position oder Stellung zu bringen.

Aus der DE 38 40 125 A1 ist eine Schiebervorrichtung zur variablen Drosselung des Abflusses von Abwasser aus Abwasserspeichern oder Abwasserkanälen bekannt. Sie weist einen an ein elektrisches Netz anschließbaren Stellantrieb zum Verstellen des Schiebers und eine Notbetätigungseinrichtung auf, die eine Notantriebseinrichtung aufweist. Diese Vorrichtung sieht Steuer- und/oder Schaltmittel vor, die auf den Ausfall der Netzspannung ansprechen und infolge des Ausfalls der Netzspannung die Notantriebseinrichtung aktivieren, die zur Überführung des Schiebers in eine vorgegebene Sicherheitsstellung dient und mittels Energie aus mindestens einem Energiespeicher betrieben werden kann.

Die US 2007/075285 A1 zeigt eine Turbinendampfventil-Betätigungsvorrichtung, die sowohl eine präzise Modulation der Ventilstellungssteuerung als auch ein unabhängiges ausfallsicheres Notschließen des Ventils unabhängig von der modulierten Stellung ermöglicht. Diese Vorrichtung besteht aus einer Tandem-Anordnung eines elektrischen Ventilstellantriebs (mit Rollen- oder Kugelumlaufspindelantrieb), der von einem herkömmlichen Servopositionsregler mit Resolver-Rückkopplung betrieben wird, und einem Hydraulikzylinder mit gleichem oder größerem Hub, der von einem herkömmlichen synthetischen Flüssigkeitszufuhrsystem versorgt wird. Der elektrische Stellantrieb und der Hydraulikzylinder sind in ihrer Einbaulage umkehrbar und können sowohl für die direkte Kopplung von Dampfventilspindeln als auch für die Betätigung von Drehhebelventilgestellen eingesetzt werden.

Die EP 2 255 115 A1 zeigt eine Betätigungsvorrichtung für einen Absperrschieber, mit einer Spindel, die in einem mit dem Absperrschieber verbindbaren Betätigungsgehäuse linear beweglich ist, wobei die Spindel auf den Absperrschieber einwirkt, um den Absperrschieber zwischen einer offenen und einer geschlossenen Stellung zu verschieben, wobei die Spindel von einem Motor in einer ersten Richtung in eine stationäre Betriebsposition angetrieben wird und in dieser Position mittels eines auf die Spindel einwirkenden Federelements in einer zweiten, entgegengesetzten Richtung in eine Abschaltposition vorgespannt ist.

EP 2 255 115 A1 beschreibt einen Aktuator, der bei der Förderung von Kohlenwasserstoffverbindungen im Meer unter Wasser eingesetzt werden kann. Der Aktuator umfasst eine mechanische Feder, die im komprimierten Zustand mechanische Energie speichern kann. Die Feder kann dabei mit Hilfe eines elektrisch kontrollierbaren Triggers in den entspannten Zustand überführt werden, wobei dadurch die mechanische Energie freigesetzt wird, die zur Aktuierung genutzt werden kann.

Von diesem technischen Hintergrund ausgehend, liegt der Erfindung die Aufgabe zugrunde, den konstruktiven Aufwand eines Stellantriebs zu vermindern.

Zur Lösung der genannten Aufgabe sind erfindungsgemäß die Merkmale des Anspruchs 1 vorgesehen. Insbesondere wird somit zur Lösung der genannten Aufgabe bei einem Stellantrieb der eingangs beschriebenen Art erfindungsgemäß vorgeschlagen, dass der Energiespeicher ein pneumatischer Energiespeicher ist. Somit ist ein Energiespeicher verwendbar, der im Vergleich zu einem Energiespeicher mit mechanischer Federkraft mit einem geringeren Eigengewicht ausbildbar ist, weil die mechanischen Federn verzichtbar sind. Der konstruktive Aufwand ist somit reduzierbar. Von Vorteil ist weiter, dass ein physikalisch unabhängiges System für den Notantrieb bereitstellbar ist. Die Armatur kann hierbei beispielsweise als Ventil, Schieber, Hahn oder Klappe ausgebildet sein oder zumindest ein Ventil, einen Schieber, einen Hahn und/oder eine Klappe aufweisen.

Erfindungsgemäß ist vorgesehen, dass der Energiespeicher eine Druckkammer mit einem expandierbaren Volumen aufweist, wobei im Betrieb des Notantriebs eine Expansionsbewegung der Druckkammer auf den Abtrieb leitbar ist. Somit ist eine Druckkraft, die im Energiespeicher entwickelbar ist, direkt in einen Antrieb des Abtriebs umsetzbar. Ein Betrieb von Kompressoren ist zum Betrieb des Notantriebs verzichtbar.

Ferner ist zur Lösung der eingangs genannten Aufgabe erfindungsgemäß vorgesehen, dass der Energiespeicher mit dem Motor durch Betätigung des Motors gegen eine Endlage des Stellantriebs aufladbar ist.

Bevorzugt ist vorgesehen, dass eine, insbesondere die bereits erwähnte, Druckkammer im Betrieb nach außen abgeschlossen betreibbar ist. Ein Kompressor ist somit zum Betrieb verzichtbar und/oder der entspannte Energiespeicher ist mit einen Anfangsdruck vorspannbar.

Bei einer vorteilhaften Ausgestaltung kann vorgesehen sein, dass der Energiespeicher mit einer Überwachungseinrichtung verbunden ist, welche zu Überwachung eines Betriebsdrucks des Energiespeichers eingerichtet ist. Somit kann eine Einsatzbereitschaft des Notantriebs einfach überwacht werden.

Bei einer vorteilhaften Ausgestaltung kann vorgesehen sein, dass der Energiespeicher mit einer Befülleinrichtung verbunden ist, welche zur Erhöhung des oder eines Betriebsdrucks des Energiespeichers durch Zufuhr von Gas eingerichtet ist. Somit ist/sind ein Aufladen des Energiespeichers und/oder ein Wiederherstellen einer Funktionsfähigkeit des Notantriebs einfach ausführbar.

Als Gas ist beispielsweise Druckluft oder Stickstoff oder ein anderes Gas verwendbar, beispielsweise abhängig von weiteren Anforderungen wie Explosionsschutz oder Entzündlichkeit oder Verfügbarkeit.

Bei einer vorteilhaften Ausgestaltung kann vorgesehen sein, dass der Energiespeicher wenigstens eine Druckkammer aufweist, die durch wenigstens einen Topf und wenigstens einen in dem Topf beweglich geführten Kolben begrenzt ist. Somit ist eine Druckkraft auf einfache Weise in eine zum Antrieb des Abtriebs nutzbare mechanische Kraft umwandelbar.

Hierbei kann vorgesehen sein, dass zwischen dem Kolben und dem Topf eine Dichtung ausgebildet ist, welche die Druckkammer durch ihre Lage in zwei fluidisch verbundene Teilkammern unterteilt. Somit ist ein Raum, der von der Dichtung bei der Expansion durchfahren wird, zur Speicherung von Druckluft nutzbar, die zum Antrieb der Expansion verwendbar ist.

Bei einer vorteilhaften Ausgestaltung kann vorgesehen sein, dass eine von zwei Teilkammern, insbesondere eine der zwei bereits erwähnten Teilkammern, einer, insbesondere der bereits erwähnten, Druckkammer in einem, insbesondere dem bereits erwähnten, Kolben des Energiespeichers ausgebildet ist. Somit ist ein Raum zur Aufnahme von energetisch aufgeladener Luft in einem beweglichen Teil des Energiespeichers bereitstellbar.

Bei einer vorteilhaften Ausgestaltung kann vorgesehen sein, dass eine von zwei Teilkammern, insbesondere eine der zwei Teilkammern einer, insbesondere der bereits erwähnten, Druckkammer in einem, insbesondere dem bereits erwähnten, Topf des Energiespeichers ausgebildet ist. Somit ist ein Raum zur Aufnahme von energetisch aufgeladener Luft in einem stationären Teil des Energiespeichers bereitstellbar.

Bei einer vorteilhaften Ausgestaltung kann vorgesehen sein, dass an die Druckkammer eine weitere Druckkammer fluidisch angeschlossen ist. Somit ist ein Energiespeicher für energetisch aufgeladene Luft vergrößerbar. Die weitere Druckkammer kann hierbei beispielsweise an einen, insbesondere den bereits erwähnten, Topf angeschlossen sein. Somit ist zusätzliche, energetisch aufgeladene Luft einfach in der Druckkammer bereitstellbar. Hierbei kann vorgesehen sein, dass die weitere Druckkammer die Druckkammer umschließt. Somit ist zusätzlicher axialer Bauraum für die weitere Druckkammer verzichtbar.

Hierbei kann alternativ oder zusätzlich vorgesehen sein, dass die weitere Druckkammer durch eine Außenseite des Topfes begrenzt ist. Somit sind zusätzliche Wandungen reduzierbar. Somit ist außerdem ein radialer Platzbedarf geringer haltbar. Wie bereits erwähnt wurde, ist erfindungsgemäß vorgesehen, dass der Energiespeicher mit dem (vorzugsweise elektrischen) Motor aufladbar ist. Von Vorteil ist dabei, dass ein weiterer Motor zum Aufladen des Energiespeichers verzichtbar ist. Somit ist ein konstruktiver Aufwand des Stellantriebs reduzierbar.

Erfindungsgemäß ist dabei, wie bereits erwähnt, vorgesehen, dass das Aufladen durch Betätigung des Motors gegen eine Endlage des Stellantriebs bewirkbar ist. Somit ist eine schaltbare Einkupplung des Motors an den Energiespeicher zum Aufladen verzichtbar.

Bei einer nicht-erfindungsgemäßen Ausgestaltung kann beispielsweise vorgesehen sein, dass der Energiespeicher einen Federspeicher aufweist. Somit ist ein alternativer Energiespeicher bereitstellbar, beispielsweise für Anwendungen, in denen ein Einsatz von Druckluft nicht erwünscht oder nicht möglich ist. Besonders günstig ist es dabei, wenn der Federspeicher und der pneumatische Energiespeicher austauschbar sind, beispielsweise zur Bildung einer Baureihe von Stellantrieben, bei welcher die übrigen Teile und Komponenten jenseits von einer Art des Energiespeichers gleich wählbar sind.

Bei einer vorteilhaften Ausgestaltung kann vorgesehen sein, dass der Notantrieb und der Motor in Bezug auf den Abtrieb seriell angeordnet sind. Somit ist auf einfache Weise ein vom Motor entwickeltes Drehmoment zum Aufladen des Energiespeichers nutzbar.

Hierbei kann vorgesehen sein, dass der Notantrieb in einem Antriebsstrang zwischen Motor und Abtrieb angeordnet ist. Somit ist ein kompakter Stellantrieb bildbar.

Bei einer vorteilhaften Ausgestaltung kann vorgesehen sein, dass der Notantrieb und der Motor in Bezug auf den Abtrieb parallel angeordnet sind. Somit ist auf einfache Weise ein vom Motor entwickeltes Drehmoment am Notantrieb vorbei zum Abtrieb leitbar.

Bei einer vorteilhaften Ausgestaltung kann vorgesehen sein, dass der Notantrieb und der Motor so miteinander gekoppelt sind, dass sich die jeweils erzeugten Drehmomente und/oder Kräfte am Abtrieb überlagern. Somit ist eine Kupplungsvorrichtung beispielsweise zum wahlweisen Zuschalten von Motor oder Notantrieb verzichtbar.

Bei einer vorteilhaften Ausgestaltung kann vorgesehen sein, dass der Motor über ein selbsthemmendes Getriebe mit dem Abtrieb antriebsverbunden ist. Von Vorteil ist dabei, dass eine Motorseite des Stellantriebs als Abstützpunkt für den Notantrieb verwendbar ist.

Bevorzugt ist der Notantrieb vom Abtrieb rückwärts antreibbar, beispielsweise zum Aufladen des Energiespeichers.

Bevorzugt ist hierbei vorgesehen, dass der Motor über das selbsthemmende Getriebe mit einer Koppelstelle von dem Motor und dem Notantrieb antriebsverbunden ist. Somit ist verhinderbar, dass der Notantrieb den Motor rückwärts antreiben kann. Das selbsthemmende Getriebe ist somit als Anschlag nutzbar, an welchem sich der Notantrieb in seinem Betrieb abstützen kann.

Bei einer vorteilhaften Ausgestaltung kann vorgesehen sein, dass der Energiespeicher einen Detektor aufweist, mit dem ein Erreichen eines aufgeladenen Zustands des Energiespeichers detektierbar ist. Somit ist ein vollständiges Aufladen des Energiespeichers überwachbar. Der Motor kann hierbei abschaltbar sein und/oder abgeschaltet werden, wenn der aufgeladene Zustand detektier ist.

Bei einer vorteilhaften Ausgestaltung kann vorgesehen sein, dass der Notantrieb und der Motor so miteinander gekoppelt sind, dass sich die jeweils erzeugten Drehmomente am Abtrieb überlagern. Somit ist ein Drehmoment, das vom Motor entwickelt wird, auf einfache Weise auf den Energiespeicher einbringbar, indem beispielsweise der Abtrieb blockiert wird.

Bei einer vorteilhaften Ausgestaltung kann vorgesehen sein, dass der Energiespeicher eine Arretierungsvorrichtung aufweist, mit welcher ein Entladen des Energiespeichers sperrbar ist. Von Vorteil ist dabei, dass ein aufgeladener Zustand des Energiespeichers konservierbar ist, bis ein Antrieb mit dem Notantrieb benötigt wird.

Bei einer vorteilhaften Ausgestaltung ist die Stellung der Arretierungsvorrichtung detektierbar. Somit kann einfach und direkt erkannt werden, dass ein Notbetrieb erfolgt ist. Die kann beispielsweise kombiniert werden mit einer Detektion eines Erreichens einer zugehören Endlage, wodurch ein Abschluss des Notbetriebs erkennbar ist.

Bei einer vorteilhaften Ausgestaltung kann vorgesehen sein, dass der Abtrieb ein rotatorischer Abtrieb ist. Somit ist die Erfindung bei Armaturen, die durch eine Dreh- oder Schwenkbewegung betätigt werden, verwendbar.

Bei einer vorteilhaften Ausgestaltung kann vorgesehen sein, dass der Abtrieb ein translatorischer Abtrieb ist. Somit ist ein direkter Antrieb durch eine Expansionsbewegung des Energiespeichers ausführbar.

Eine Abmessung des Energiespeichers kann daher so bemessen sein, dass im expandierten Zustand beide Endlagenschalter eines Stellwegs des Stellantriebs betätigt sind und/oder die geöffnete Arretierungsvorrichtung detektiert wird, bevorzugt in Kombination mit einem Endlagenschalter. Dies ermöglicht eine einfache Detektion des expandierten Zustands und eine einfache Unterscheidung vom Normalbetrieb.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass der Stellantrieb erfindungsgemäß, insbesondere wie zuvor beschrieben und/oder nach einem der auf einen Stellantrieb gerichteten Ansprüche, ausgebildet ist, wobei der Stellantrieb mit dem Motor gegen einen Endanschlag verfahren wird und der Motor weiter betrieben wird, bis der Energiespeicher aufgeladen ist. Von Vorteil ist dabei, dass ein Umschalten einer Arbeitsweise des Motors zwischen einer Betätigung einer angeschlossenen Armatur und einem Aufladen des Energiespeicher verzichtbar ist. Ein Richtungswechsel des Motors ist nicht zwingend erforderlich.

Ferner ist bei dem Verfahren zur Lösung der Aufgabe vorgesehen, dass der Energiespeicher mit dem Motor durch Betätigung des Motors gegen eine Endlage des Stellantriebs aufgeladen wird.

Bei einer vorteilhaften Ausgestaltung kann vorgesehen sein, dass der Motor abgeschaltet wird, wenn ein aufgeladener Zustand des Energiespeichers detektiert wird. Somit ist eine thermische und/oder mechanische Überlastung des Stellantriebs vermeidbar.

Bei einer vorteilhaften Ausgestaltung kann vorgesehen sein, dass der Energiespeicher im aufgeladenen Zustand gegen ein Entladen vorzugsweise automatisch gesperrt wird. Von Vorteil ist dabei, dass ein unbeabsichtigtes Entladen des Energiespeichers vermeidbar ist.

Bei einer vorteilhaften Ausgestaltung kann vorgesehen sein, dass der Energiespeicher im Betrieb des Notantriebs so lange entspannt wird, bis beide Endlagenschalter eines Stellwegs des Stellantriebs gleichzeitig betätigt sind oder eine (obere) Endlage und die geöffnete Arretierungsvorrichtung erkannt wird.

Bei einer vorteilhaften Ausgestaltung kann vorgesehen sein, dass zum Aufladen des Energiespeichers wenigstens ein Angriffselement des Energiespeichers, an dem eine Rückstellkraft des Energiespeichers angreift, entlang seines Stellwegs im Normalbetrieb verfahren wird. Somit ist zum Spannen des Energiespeichers kein zusätzlicher Bauraum erforderlich.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: einen erfindungsgemäßen Stellantrieb in einer ersten Stellposition in einer Ansicht auf den Abtrieb in teilweise geöffneter Darstellung,
- Fig. 2: den Stellantrieb gemäß Fig. 1 in einer Ansicht auf die Rückseite und auf den teilweise geöffneten Energiespeicher,
- Fig. 3: den Stellantrieb gemäß Fig. 1 in einer Zwischenposition,
- Fig. 4: den Stellantrieb aus Fig. 3 in einer Ansicht von hinten auf den teilweise geöffneten Energiespeicher,
- Fig. 5: den Stellantrieb gemäß Fig. 1 in einer unteren oder zweiten Stellposition,
- Fig. 6: den Stellantrieb gemäß Fig. 5 in einer Ansicht von hinten auf den teilweise geöffneten Energiespeicher,
- Fig. 7: den Stellantrieb gemäß Fig. 6 nach entsperren des Notantriebs mit vollständig abgelaufenem Notantrieb,
- Fig. 8: den Stellantrieb aus Fig. 3 mit entsperrtem und vollständig abgelaufenem Notantrieb,
- Fig. 9: den Stellantrieb gemäß Fig. 8 in einer Ansicht von hinten mit entferntem Energiespeicher
- Fig. 10: den Topf des Energiespeichers des Stellantriebs gemäß Fig. 1 in teilweise angeschnittener Darstellung,
- Fig. 11: den Kolben mit Abtrieb des Energiespeichers des Stellantriebs gemäß Fig. 1,
- Fig. 12: eine Vergrößerung eines unteren Bereichs des zusammengesetzten Energiespeichers des Stellantriebs gemäß Fig. 1 in einer Schnittdarstellung
- Fig. 13: die Arretiervorrichtung des Energiespeichers des Stellantriebs gemäß Fig. 1 in entsperrter Position in einer teilweise ausgeschnitten Darstellung,
- Fig. 14: die Arretiervorrichtung gemäß Fig. 13 in arretierender Stellung,
- Fig. 15: eine Vergrößerung aus Fig. 1 mit einem oberen Endlagenschalter,
- Fig. 16: ein Schaltplan zur Erläuterung der Funktionsweise eines erfindungsgemäßen Stellantriebs
- Fig. 17: eine weitere mögliche Ausgestaltung eines nichterfindungsgemäßenStellantriebs mit einem Federspeicher als Energiespeicher in einem Axialschnitt,
- Fig. 18: den Stellantrieb aus Fig. 17 ohne Handrad und Motor in einem gegenüber Fig. 17 um 90° gedrehten Axialschnitt,
- Fig. 19: den Stellantrieb aus Fig. 18 ohne Gehäuse in einer dreidimensionalen Schrägansicht auf den Energiespeicher,
- Fig. 20: den Stellantrieb aus Fig. 19 ohne Abtrieb in einer Seitenansicht und
- Fig. 21: die Arretiervorrichtung des Stellantriebs aus Fig. 17 in einer Axialansicht.

Die Figuren werden im Folgenden gemeinsam beschrieben.

Ein im Ganzen mit 1 bezeichneter Stellantrieb hat einen Abtrieb 4, der in an sich bekannter Weise mit einer hier nicht näher dargestellten Armatur koppelbar ist. Mit dem Motor 2 ist somit diese Armatur betätigbar. Es kann somit beispielsweise motorisch geöffnet und/oder geschlossen werden.

Der Stellantrieb 1 hat außerdem einen Notantrieb 5, mit dem der Abtrieb 4 ebenfalls antreibbar ist, beispielsweise dann, wenn eine Energieversorgung des elektrischen Motors 2 unterbrochen ist. Hierzu wird der Notantrieb 5 aus einem Energiespeicher 6 gespeist.

Im Ausführungsbeispiel hat der Stellantrieb 1 einen linear beweglichen Abtrieb 4.

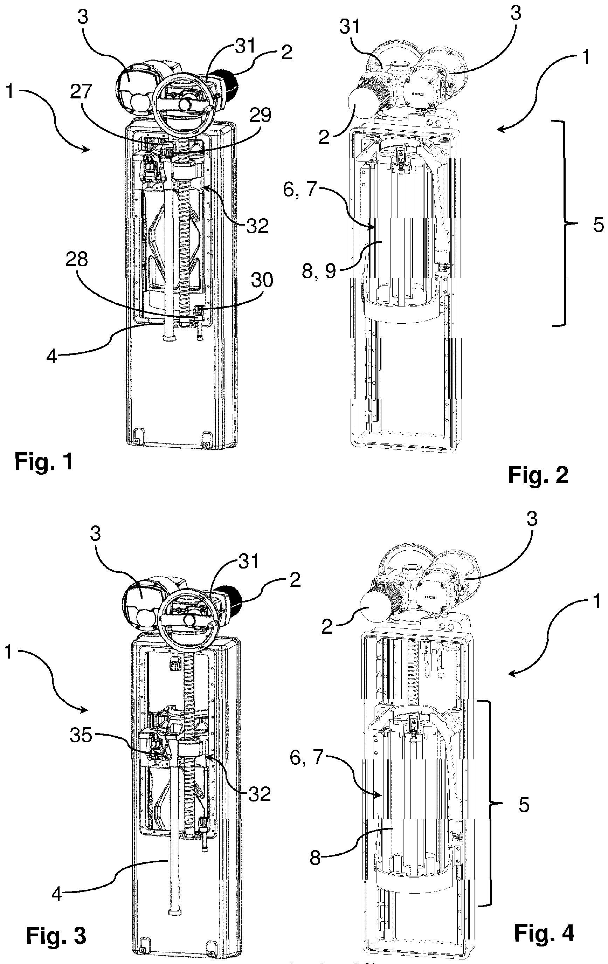

In dem erfindungsgemäßen Ausführungsbeispiel nach den gezeigten Figuren 1 bis 16 ist der Energiespeicher 6 als pneumatischer Energiespeicher 7 ausgebildet. Dieser pneumatische Energiespeicher 7 hat eine Druckkammer 8, die ein expandierbares Volumen 9 nach außen dicht umschließt. Der Notantrieb 5 wird durch die Expansionsbewegung dieses expandierbaren Volumens 9 aufgrund eines Überdrucks in der Druckkammer 8 angetrieben.

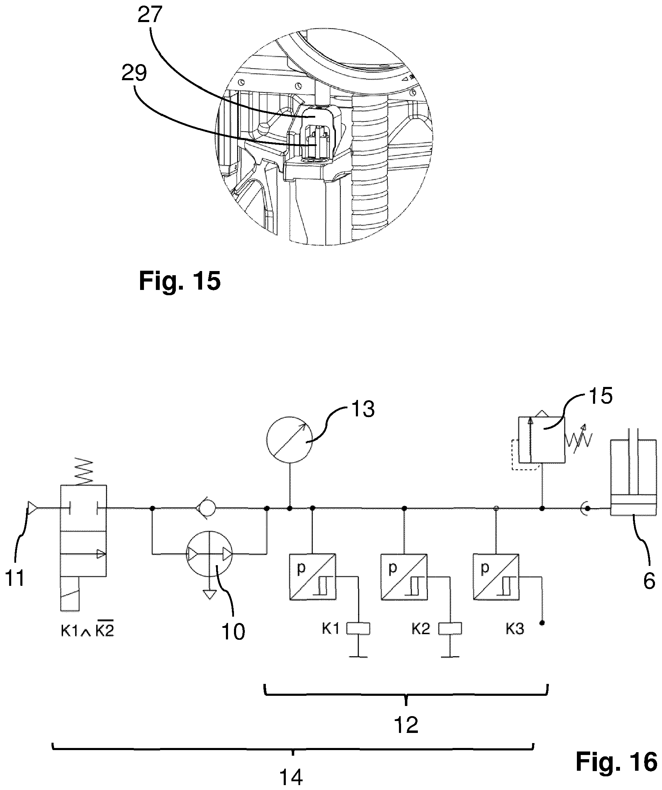

Fig. 16 zeigt einen Druckverstärker 10, der an den pneumatischen Energiespeicher 7 angeschlossen ist und der aus einer Gaszufuhr 11, hier beispielhaft als Druckluftversorgung gezeigt, gespeist wird.

Der Druckverstärker 10 ist optional: Beispielsweise kann die Druckluftversorgung 6 bar Druckluft bieten, und über gezeigten Druckverstärker 10 lässt sich dieser Druck ohne weitere Energiequelle z.B. auf 10,5 bar anheben. Diese Option kann erforderlich oder günstig sein, wenn ein Versorgungsdruck zum Erreichen der erforderlichen Kraft nicht ausreicht.

Eine Überwachungseinrichtung 12 kann hierbei dazu eingerichtet sein, einen momentanen Betriebsdruck 13 in der Druckkammer 8 zu erfassen und eine Befülleinrichtung 14, die den Druckverstärker 10 umfassen kann, anzusteuern, wenn der Betriebsdruck 13 unter einen vorgegebenen Wert fällt. Der Betriebsdruck 13 ist somit durch die Befülleinrichtung 14 einstellbar oderregelbar.

Bei weiteren Ausführungsbeispielen, beispielsweise bei einer Gasversorgung, die ein anderes Gas als Druckluft bereitstellt, kann die Überwachungseinrichtung 12 auch direkt an die Gaszufuhr 11 angeschlossen sein.

Ein Überdruckventil 15 schützt den Energiespeicher 6 vor Überlastung.

Der pneumatische Energiespeicher 7 hat einen Topf 16, in dem ein Kolben 17 beweglich geführt ist. Die bereits erwähnte Expansionsbewegung rührt aus einer Bewegung des Kolbens 17 in dem Topf 16, die von einem Betriebsdruck 13, der über dem Umgebungsdruck liegt, angetrieben wird. Zwischen dem Kolben 17 und dem Topf 16 ist eine umlaufende Dichtung 18 ausgebildet, welche die Druckkammer 8 nach außen abdichtet. Der Kolben 17 und der Topf 16 bilden somit zwei Angriffselemente 41, 42, die gegen eine druckbedingte Rückstellkraft aufeinander zu fahrbar sind.

Die Dichtung 18 begrenzt eine gedachte Trennebene zwischen einer ersten Teilkammer 19 im Topf 16 und einer zweiten Teilkammer 20 im Kolben 17. Die erste Teilkammer 19 ist mit der zweiten Teilkammer 20 über Kommunikationsöffnungen 21 fluidisch verbunden. Wenn der Kolben 17 im Topf 16 ausgefahren wird, durchfährt die Dichtung 18 den Raum 22 im Inneren des Topfes. Dieser Raum 22 wird vor der Expansionsbewegung von der zweiten Teilkammer 20 eingenommen.

Radial außerhalb des Topfes 16 ist eine weitere Druckkammer 23 ausgebildet, welche den Topf 16 ebenfalls als Begrenzung nutzt. Die weitere Druckkammer 23 ist fluidisch mit der ersten Teilkammer 19 verbunden, so dass eine Luftfüllung mit Überfluss in die erste Teilkammer 19 strömen kann. Durch diese ineinander verschachtelte Bauweise ist ein axialer Bauraum 24 des nicht expandierten Energiespeichers minimal gestaltbar. Die Außenseite 25 des Topfes 16 bildet hierbei eine Innenbegrenzung der weiteren Druckkammer 23. Hierdurch ist ein radialer Platzbedarf 26 des Energiespeichers minimal wählbar.

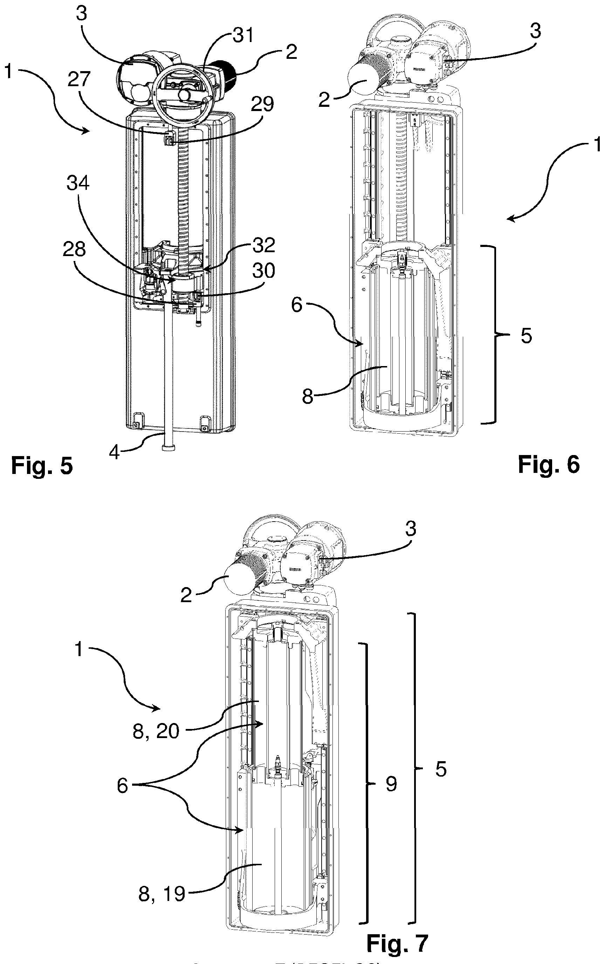

Der Stellantrieb 1 ist mit zwei Anschlägen 27, 28 für jeweils eine Endlage ausgerüstet. Hierbei dient der Anschlag 27 für eine erste oder obere Endlage des Stellantriebs 1, wie sie in Fig. 1 dargestellt ist. Der Anschlag 28 dient zur Definition einer weiteren oder unteren Endlage des Stellantriebs 1, wie sie in Fig. 5 gezeigt ist. Der Anschlag 27 hat hierbei einen ersten Endlagenschalter 29, der Anschlag 28 einen zweiten Endlagenschalter 30.

Zwischen dem Motor 2 und dem Abtrieb 4 ist ein selbsthemmendes Getriebe 31, beispielsweise ein Schneckengetriebe, ausgebildet. Das selbsthemmende Getriebe 31 hat die Funktion, dass die Motorseite nicht rückwärts über den Abtrieb 4 antreibbar ist. Dem selbsthemmenden Getriebe 31 ist ein Spindeltrieb 32 nachgeschaltet, der hier beispielhaft als Kugelumlaufspindel ausgebildet ist. Bei weiteren Ausführungsbeispielen kann der Spindeltrieb 32 alternativ selbsthemmend ausgeführt sein, beispielsweise über eine Trapezspindel. Ein weiteres selbsthemmendes Getriebe 31, kann entfallen.

Die Motorseite bildet somit einen Abstützpunkt 34 für das Wirken des noch genauer zu beschreibenden Notantriebs 5.

Im Folgenden wird die Funktionsweise des erfindungsgemäßen Stellantriebs 1 anhand des Bewegungsablaufs in den Fig. 1 bis 8 näher beschrieben.

Ausgangspunkt ist die Situation gemäß den Fig. 1 und 2. Der Energiespeicher 6 ist vollständig komprimiert, und der Stellantrieb 1 ist in seine obere Stellposition verfahren, die durch den Anschlag 27 definiert ist. Eine angeschlossene Armatur (nicht gezeigt) ist in einer ersten Funktionsendstellung. Der zugehörige erste Endlagenschalter 29 ist betätigt. Wird nun der Stellantrieb 1 betätigt, so bewegt sich der Energiespeicher 6 mit dem Abtrieb 4 gemeinsam aufgrund des Spindeltriebs 32 in Richtung des Anschlags 28.

Die Fig. 3 und 4 zeigen einen Zwischenzustand dieser Bewegung.

Da sich der Abtrieb 4 bewegt, wird die angeschlossene Armatur in seine zweite Funktionsendstellung überführt oder in jeder Zwischenstellung positioniert zur Regelung des Volumenstromes, insbesondere in einem Regelbetrieb. Diese Stellbewegung kann fortgesetzt werden, bis der Anschlag 28 erreicht ist und ein zweiter Endlagenschalter 30 an diesem Anschlag 28 betätigt ist. Diese Situation zeigen die Fig. 5 und 6.

Wird nun der Notantrieb 5 ausgelöst, so wird eine mechanische Verbindung zwischen dem ersten Angriffselement 41 und dem zweiten Angriffselement 42, hier also zwischen dem Topf 16 und dem Kolben 17, gelöst. Wie im Folgenden noch genauer beschrieben wird, wird diese mechanische Verbindung durch die Arretierungsvorrichtung 36 freigegeben.

Beispielsweise kann vorgesehen sein, dass diese Arretierungsvorrichtung 36 bei einer Unterbrechung der Stromversorgung des Motors 2 automatisch auslöst.

Die Arretierungsvorrichtung 36 betätigt somit die Koppelstelle 35, an welcher die Kräfte, die durch den Motor 2 oder den Notantrieb 5 entwickelbar sind, auf den Abtrieb 4 zu wirken.

Aufgrund des Betriebsdrucks in der Druckkammer 8 expandiert der Energiespeicher 6, und die Angriffselemente 41 und 42 bewegen sich voneinander weg.

Der Abtrieb 4 ist starr mit dem beweglichen Angriffselement 42, also dem Kolben 17 verbunden, so dass der Abtrieb 4 durch die Expansionsbewegung nach oben bewegt wird. Dies bewirkt ein Umschalten oder eine Veränderung, beispielsweise ein Öffnen oder ein Schließen oder eine Veränderung einer Armaturenstellung der Armatur. Diese Bewegung findet spätestens an dem Anschlag 27 ihr Ende.

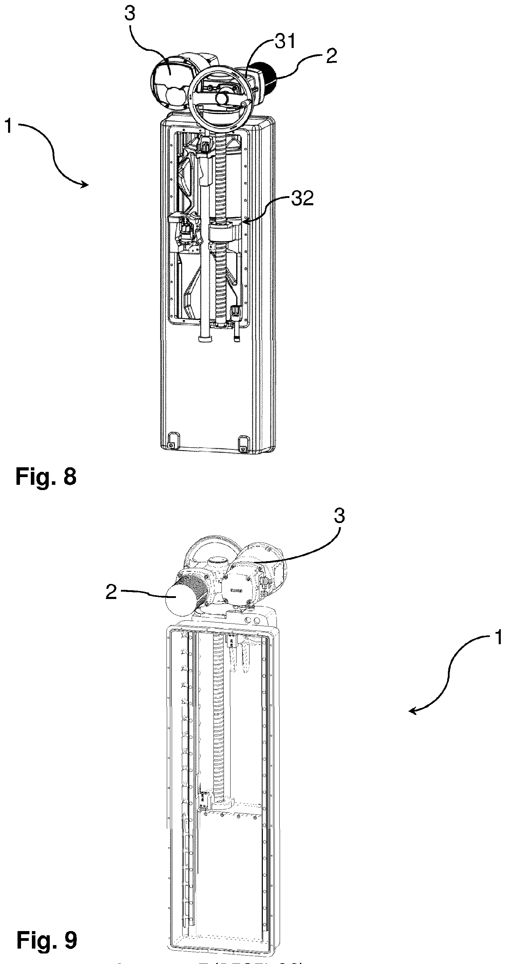

Fig. 8 zeigt eine Situation, nachdem die Arretierungsvorrichtung 36 in einer mittleren Position des Stellbereichs geöffnet wurde. In diesem Fall kann sich der Energiespeicher 6 nur teilweise entspannen, bis der Anschlag 27 erreicht ist. Für das erneute Laden des Energiespeichers 6 und die Rückkehr in den Regelbetrieb wird nun der Stellantrieb 1 in einer Richtung betrieben, bei der der Energiespeicher 6 gegen den Anschlag 27 gedrückt wird. Dabei wird der erste Endlagenschalter 29 ignoriert, der normalerweise zu einem Abschalten des Motors 2 führen würde. Dies kann beispielsweise die Steuerungseinheit 3 danach entscheiden, weil die Arretierungsvorrichtung 36 geöffnet ist.

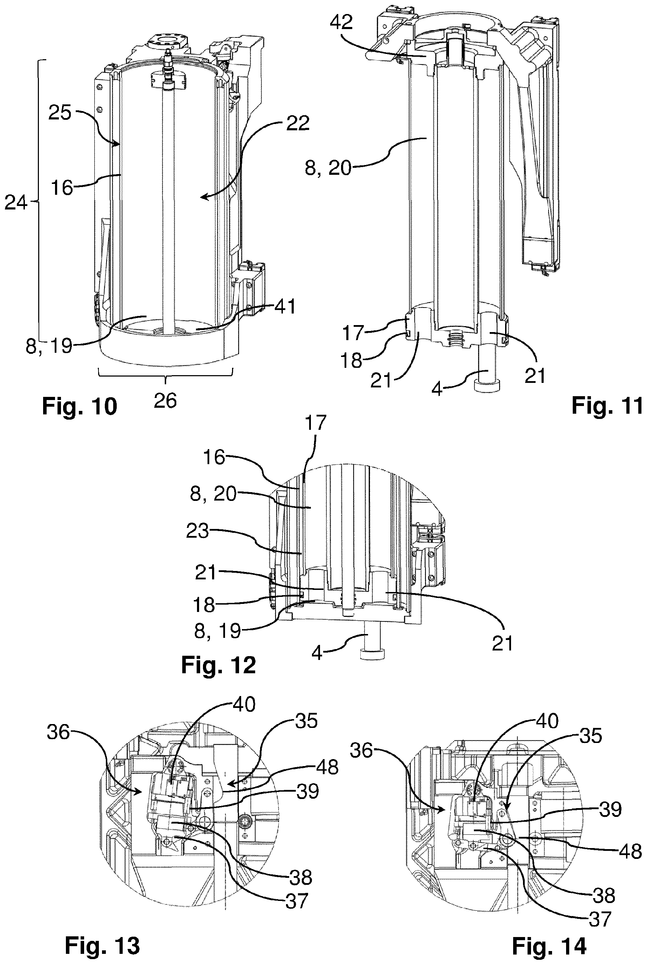

Das Verfahren des Stellantriebs über das Erreichen des Anschlags 27 und die Betätigung des ersten Endlagenschalters 29 hinaus führt dazu, dass der Energiespeicher 6 wieder komprimiert wird. Dieses Verfahren wird so lange fortgesetzt, bis die Angriffselemente 41 und 42 wieder in einer Relativposition zueinander gebracht sind, in der sie verriegelt oder arretiert werden können. Fig. 13 zeigt in einer Detaildarstellung die Arretiervorrichtung 36 vor Erreichen dieser Position. Die Arretierungsvorrichtung 36 hat hierbei ein Kniehebel 37, der durch einen Elektromagnet 38, beispielsweise einen Haftmagnet, in seiner fast durchgestreckten Position fixierbar ist.

Die Arretierungsvorrichtung 36 hat weiter ein Rückstellelement 39, mit welcher der Kniehebel 37 in die Nähe seiner vollständig durchgedrückten Stellung gedrückt wird, um ein Anziehen des Elektromagneten 38 zu ermöglichen.

Fig. 14 zeigt den Zustand, wenn die Angriffselemente 41 und 42 so nahe zueinander gedrückt sind, dass eine Verriegelung möglich ist. Das Rückstellelement 39 hat hierbei den Kniehebel 37 in eine Aussparung 48 gedrückt, wodurch der Elektromagnet 38 so gestellt ist, dass eine Haltekraft elektromagnetisch entwickelt werden kann. In diesem Zustand ist die Situation von Fig. 1 und 2 wiederhergestellt.

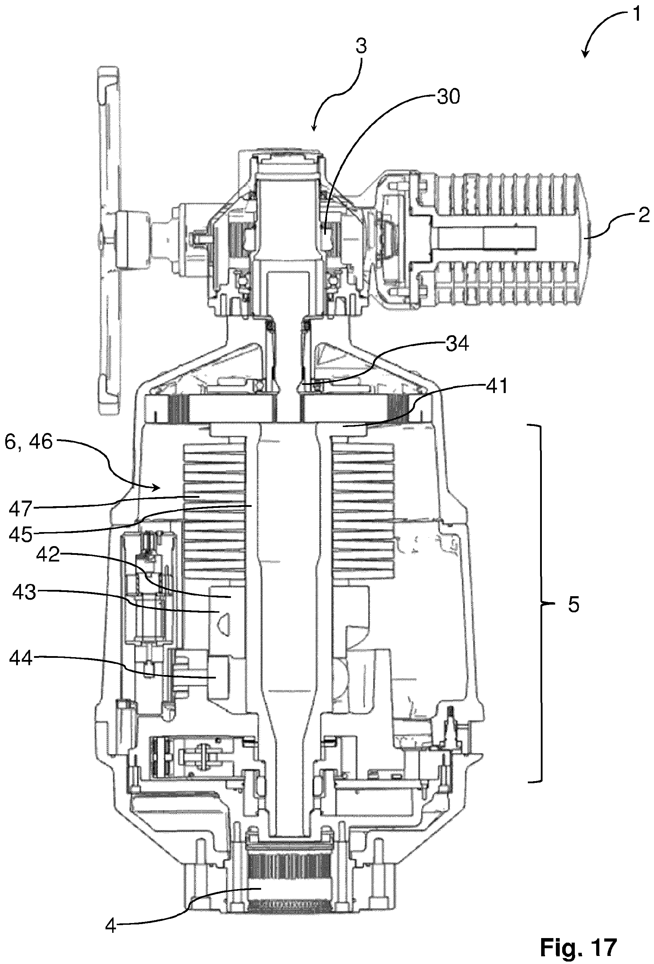

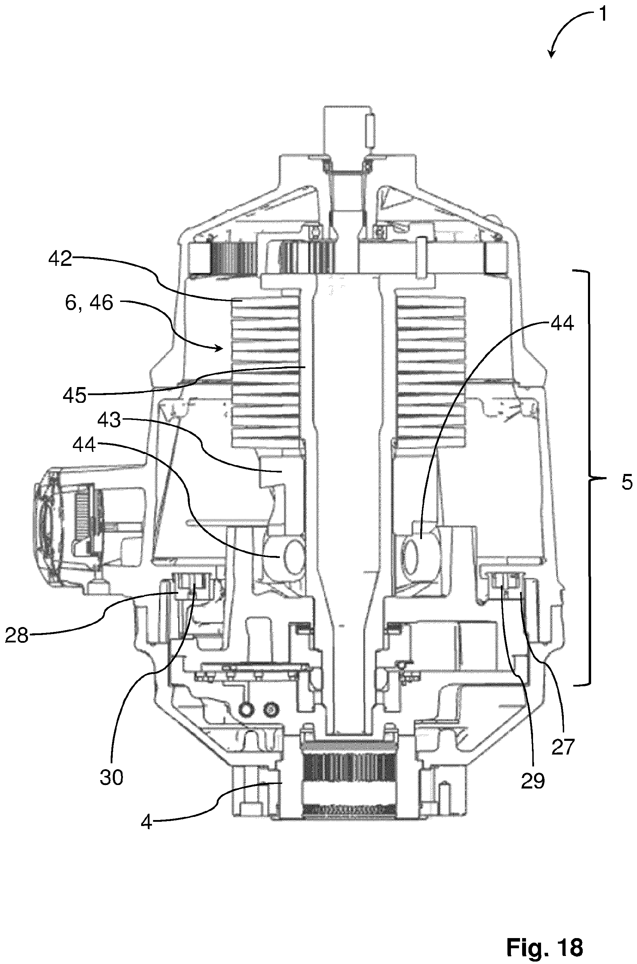

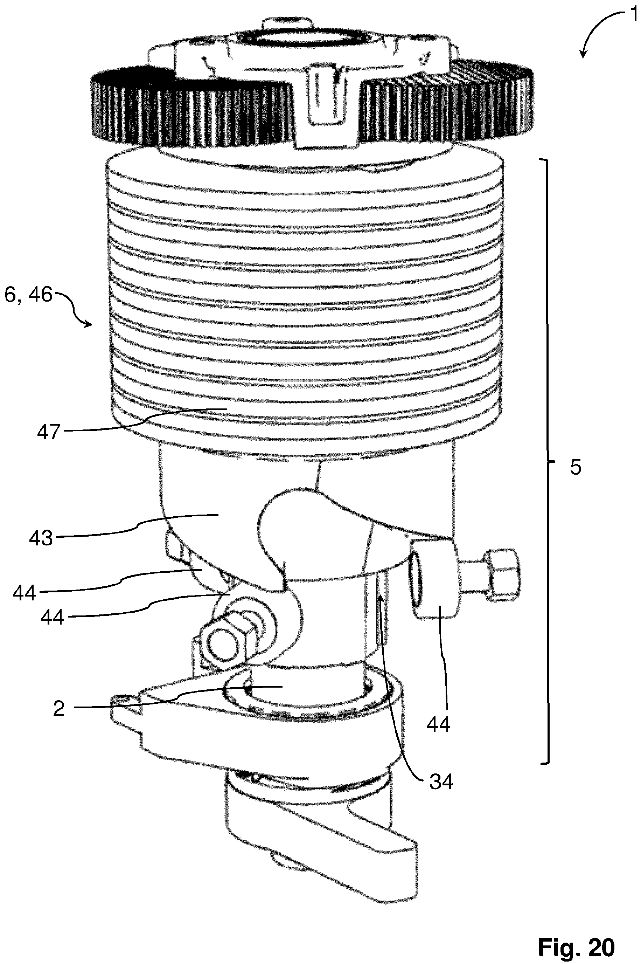

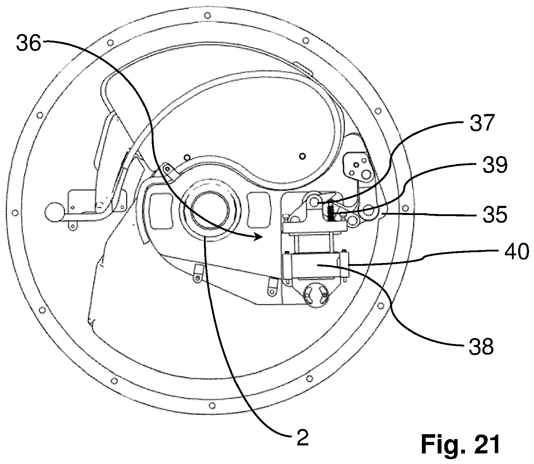

Die Fig. 17 bis 21 zeigen eine weitere nichterfindungsgemäße Ausgestaltung eines Stellantriebs 1. Konstruktiv und/oder funktionell gleichartige oder identische Bauteile und Funktionseinheiten sind mit denselben Bezugszeichen bezeichnet und nicht noch einmal gesondert beschrieben. Die Ausführungen zu den Fig. 1 bis 16 gelten daher zu den Fig. 17 bis 21 entsprechend.

Der Stellantrieb 1 nach den Fig. 17 bis 21 unterscheidet sich von dem vorangehenden erfindungsgemäßen Ausführungsbeispiel dadurch, dass kein pneumatischer Energiespeicher 7, sondern ein Federspeicher 46 als Energiespeicher 6 eingesetzt wird und dadurch, dass der Abtrieb 4 rotatorisch ausgebildet ist.

Hierzu wirkt das bewegliche Angriffselement 42 des Energiespeichers 6 auf eine Kurvenscheibe 43. Die Kurvenschreibe 43 beaufschlagt Laufrollen 44, die an dem Abtrieb 4 angeordnet sind. Dies führt dazu, dass eine Expansionsbewegung des Energiespeichers 6 in eine rotatorische Bewegung des Abtriebs umgewandelt wird. Der Motor 2 treibt eine Zentralwelle 45 an, die mit einer Arretierungsvorrichtung 36 mit dem Abtrieb 4 verriegelbar ist. Die Arretierungsvorrichtung 36 betätigt somit die Koppelstelle 35, an welcher sich die Drehmomente, die durch den Motor 2 und den Notantrieb 5 entwickelbar sind, abstützen, um auf den Abtrieb 4 zu wirken. In dieser verriegelten Position ist der Energiespeicher 6 komprimiert und wird während der normalen Betätigung des Stellantriebs 1 mitgedreht. Der Energiespeicher 6 weist im gezeigten Ausführungsbeispiel wie erwähnt einen Federspeicher 46 mit Tellerfedern 47 auf. An Stelle des Federspeichers 46 ist jedoch auch ein pneumatischer Energiespeicher 7 verwendbar, wodurch dann eine erfindungsgemäße Ausgestaltung erzielt wäre.

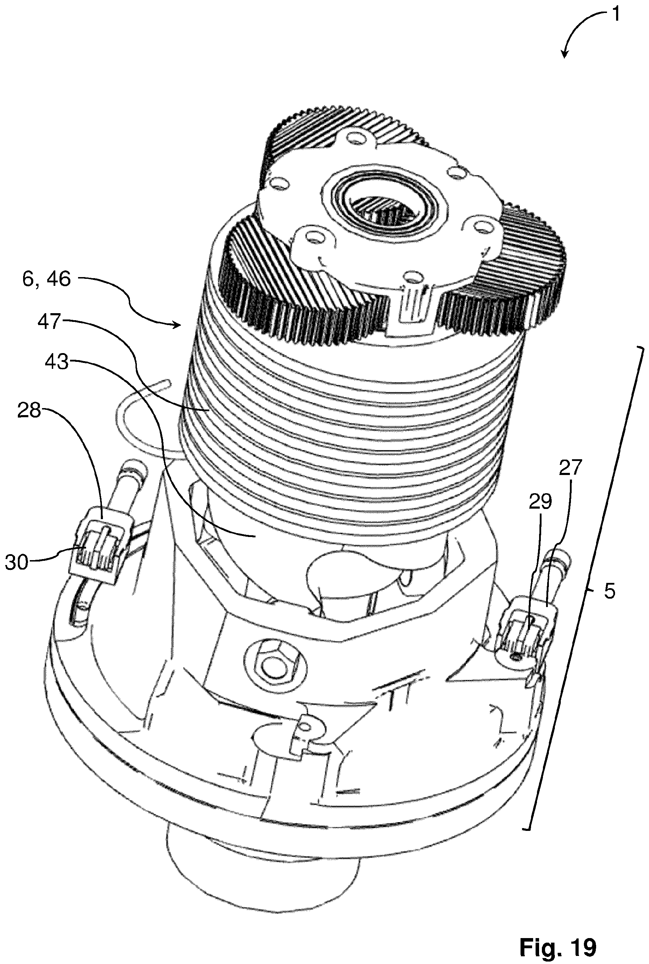

Fig. 19 zeigt, dass der Abtrieb 4 gegen zwei Anschläge 27, 28 verfahrbar ist, die jeweils eine Endlage des Stellantriebs 1 definieren. Wird in der Situation gemäß Fig. 19 die Arretierungsvorrichtung 36 gelöst, so kann sich der Abtrieb 4 unabhängig von der Zentralwelle 45 bewegen. Solange sich der Motor 2 nicht bewegt, ist die Zentralwelle 45 wegen des selbsthemmenden Getriebes 31 fixiert. Dies führt dazu, dass bei geöffneter Arretierungsvorrichtung 36 der Energiespeicher 6 entspannen kann, wodurch die Kurvenscheibe 43 die Laufrollen 44 und somit den Abtrieb 4 in eine Drehbewegung zwingt. Diese Drehbewegung läuft, bis der zweite Anschlag 28 erreicht ist.

Wird nun der Stellantrieb 1 in denselben Richtungssinn weiterverfahren, der durch den Endlagenschalter 30 abgeschaltet sein müsste, so bewegt sich die Kurvenscheibe 43, die drehfest, aber axial verschieblich auf der Zentralwelle 45 angeordnet ist, weiter und wird durch die feststehenden Laufrollen 44 nach oben gedrückt. Der Federspeicher 46 wird somit gespannt. Dies kann so lange fortgesetzt werden, bis die Arretierungsvorrichtung 36 einfällt, was durch einen zugehörigen dritten Endlagenschalter 40 als Detektor detektierbar ist. Hierbei wirkt eine Rückstellfeder 39, um den Kniehebel 37 in die Aussparung 48 zu drücken. In dieser Position ist der Stellantrieb 1 bereit für ein Rückholen der angeschlossenen Armatur bis zur ersten Endlage, die durch den Anschlag 27 definiert ist.

Es kann somit allgemein gesagt werden, dass der Energiespeicher 6 bei den vorgestellten erfindungsgemäßen Ausführungsbeispielen als auch bei dem Stellantrieb 1 gemäß Figur 17 im Betrieb des Notantriebs 5 so lange entspannt wird, bis der Endlagenschalter 30 eines Stellwegs, der durch den Anschlag 28 begrenzt ist, betätigt ist.

Aus den Zeichnungen ist noch ersichtlich, dass ein bewegliches Angriffselement 42, an dem eine Rückstellkraft des Energiespeichers 6 angreift und mit dem der Energiespeicher 6 spannbar oder aufladbar ist, in Bezug auf eine Zentralwelle 45 axial verschieblich geführt angeordnet ist.

Zusammenfassend wird bei einem Stellantrieb 1 somit vorgeschlagen, einen Energiespeicher 6, mit welchem ein Notantrieb 5 speisbar ist, durch einen elektrischen Motor 2 spannbar auszugestalten, wobei der Motor 2 wenigstens ein Angriffselement 41, 42 des Energiespeichers 6, an dem eine Rückstellkraft des Energiespeichers 6 angreift, entlang eines Stellwegs des Normalbetriebs verfährt.

### Bezugszeichenliste

- 1: Stellantrieb
- 2: (elektrischer) Motor
- 3: Steuerungseinheit
- 4: Abtrieb
- 5: Notantrieb
- 6: Energiespeicher
- 7: pneumatischer Energiespeicher
- 8: Druckkammer
- 9: expandierbares Volumen
- 10: Kompressor
- 11: Gaszufuhr
- 12: Überwachungseinrichtung
- 13: Betriebsdruck
- 14: Befülleinrichtung
- 15: Überdruckventil
- 16: Topf
- 17: Kolben
- 18: Dichtung
- 19: erste Teilkammer
- 20: zweite Teilkammer
- 21: Kommunikationsöffnungen
- 22: (von der Dichtung bei der Expansion durchfahrener) Raum
- 23: weitere Druckkammer
- 24: axialer Bauraum
- 25: Außenseite
- 26: radialer Platzbedarf
- 27: Anschlag für eine (erste) Endlage des Stellantriebs
- 28: Anschlag für eine (weitere) Endlage des Stellantriebs
- 29: erster Endlagenschalter
- 30: zweiter Endlagenschalter
- 31: selbsthemmendes Getriebe
- 32: Spindeltrieb
- 34: Abstützpunkt
- 35: Koppelstelle
- 36: Arretierungsvorrichtung
- 37: Kniehebel
- 38: Elektromagnet
- 39: Rückstellelement
- 40: (dritter, weiterer) Endlagenschalter
- 41: (erstes, stationäres) Angriffselement
- 42: (zweites, bewegliches) Angriffselement
- 43: Kurvenscheibe
- 44: Laufrolle
- 45: Zentralwelle
- 46: Federspeicher
- 47: Tellerfeder
- 48: Aussparung

## Patentansprüche

1. **Stellantrieb (1)** mit
- einem Motor (2),
- einem von dem Motor (2) antreibbaren und mit einer Armatur koppelbaren Abtrieb (4) und
- einem Notantrieb (5) mit einem Energiespeicher (6), durch den der Abtrieb (4) alternativ zum Motor (2) antreibbar ist,
- wobei der Energiespeicher (6) ein pneumatischer Energiespeicher (7) ist und
- wobei der Energiespeicher (6) eine Druckkammer (8) mit einem expandierbaren Volumen aufweist,
- wobei im Betrieb des Notantriebs eine Expansionsbewegung der Druckkammer (8) auf den Abtrieb (4) leitbar ist,
**dadurch gekennzeichnet,**
- **dass** der Energiespeicher (6) mit dem Motor (2) durch Betätigung des Motors (2) gegen eine Endlage des Stellantriebs (1) aufladbar ist.

2. Stellantrieb (1) nach Anspruch 1, **dadurch gekennzeichnet, dass** die oder eine Druckkammer (8) im Betrieb nach außen abgeschlossen betreibbar ist.

3. Stellantrieb (1) nach einem der vorangehenden Ansprüche, **dadurch gekennzeichnet, dass** der Energiespeicher (6) mit einer Überwachungseinrichtung (12) verbunden ist, welche zu Überwachung eines Betriebsdrucks (13) des Energiespeichers (6) eingerichtet ist, und/oder dass der Energiespeicher (6) mit einer Befülleinrichtung (14) verbunden ist, welche zur Erhöhung des oder eines Betriebsdrucks (13) des Energiespeichers (6) durch Zufuhr von Luft eingerichtet ist.

4. Stellantrieb (1) nach einem der vorangehenden Ansprüche, **dadurch gekennzeichnet, dass** der Energiespeicher (6) wenigstens eine Druckkammer (8) aufweist, die durch wenigstens einen Topf (16) und wenigstens einen in dem Topf (16) beweglich geführten Kolben (17) begrenzt ist, insbesondere wobei zwischen dem Kolben (17) und dem Topf (16) eine Dichtung (18) ausgebildet ist, welche die Druckkammer (8) durch ihre Lage in zwei fluidisch verbundene Teilkammern unterteilt.

5. Stellantrieb (1) nach einem der vorangehenden Ansprüche, **dadurch gekennzeichnet, dass** eine der oder von zwei Teilkammern (19, 20) der oder einer Druckkammer (8) in dem oder einem Kolben (17) und/oder eine der oder von zwei Teilkammern (19, 20) der oder einer Druckkammer (8) in dem oder einem Topf (16) ausgebildet ist.

6. Stellantrieb (1) nach einem der vorangehenden Ansprüche, **dadurch gekennzeichnet, dass** an die oder eine Druckkammer (8), insbesondere an den oder einen Topf (16) der oder einer Druckkammer (8), eine weitere Druckkammer (23) fluidisch angeschlossen ist, insbesondere wobei die weitere Druckkammer (23) die Druckkammer (8) umschließt und/oder die weitere Druckkammer (23) durch eine Außenseite (25) des Topfes (16) begrenzt ist.

7. Stellantrieb (1) nach einem der vorangehenden Ansprüche, **dadurch gekennzeichnet, dass** der Energiespeicher (6) zwei gegeneinander und gegen eine Rückstellkraft zusammendrückbare Angriffselemente hat.

8. Stellantrieb (1) nach einem der vorangehenden Ansprüche, **dadurch gekennzeichnet, dass** der Energiespeicher (6) einen Federspeicher (46) aufweist.

9. Stellantrieb (1) nach einem der vorangehenden Ansprüche, **dadurch gekennzeichnet, dass** der Notantrieb (5) und der Motor (2) in Bezug auf den Abtrieb (4) seriell angeordnet sind, insbesondere wobei der Notantrieb (5) in einem Antriebsstrang zwischen Motor (2) und Abtrieb (4) angeordnet ist, und/oder dass der Notantrieb (5) und der Motor (2) in Bezug auf den Abtrieb (4) parallel angeordnet sind.

10. Stellantrieb (1) nach einem der vorangehenden Ansprüche, **dadurch gekennzeichnet, dass** der Notantrieb (5) und der Motor (2) so miteinander gekoppelt sind, dass sich die jeweils erzeugten Drehmomente und/oder Kräfte am Abtrieb (4) überlagern, und/oder dass der Motor (2) über ein selbsthemmendes Getriebe (31) mit dem Abtrieb (4), insbesondere mit einer Koppelstelle (35) von dem Motor (2) und dem Notantrieb, antriebsverbunden ist.

11. Stellantrieb (1) nach einem der vorangehenden Ansprüche, **dadurch gekennzeichnet, dass** der Energiespeicher (6) einen Detektor aufweist, mit dem ein Erreichen eines aufgeladenen Zustands des Energiespeichers (6) detektierbar ist.

12. Stellantrieb (1) nach einem der vorangehenden Ansprüche, **dadurch gekennzeichnet, dass** der Energiespeicher (6) eine Arretierungsvorrichtung (36) aufweist, mit welcher ein Entladen des Energiespeichers (6) sperrbar ist.

13. Stellantrieb (1) nach einem der vorangehenden Ansprüche, **dadurch gekennzeichnet, dass** der Abtrieb (4) ein rotatorischer und/oder ein translatorischer Abtrieb (4) ist.

14. **Verfahren zum Aufladen eines Energiespeichers (6)** eines Stellantriebs (1) nach einem der vorangehenden Ansprüche, **dadurch gekennzeichnet,**
- **dass** der Stellantrieb (1) mit dem Motor (2) gegen einen Endanschlag verfahren wird und
- **dass** der Motor (2) weiter betrieben wird, bis der Energiespeicher (6) aufgeladen ist,
- wobei der Energiespeicher (6) mit dem Motor (2) durch Betätigung des Motors (2) gegen eine Endlage des Stellantriebs (1) aufgeladen wird.

15. Verfahren nach Anspruch 14, **dadurch gekennzeichnet, dass** der Motor (2) abgeschaltet wird, wenn ein aufgeladener Zustand des Energiespeichers (6) detektiert wird und/oder dass der Energiespeicher (6) im aufgeladenen Zustand gegen ein Entladen vorzugsweise automatisch gesperrt wird.

16. Verfahren nach Anspruch 14 oder 15, **dadurch gekennzeichnet, dass** der Energiespeicher (6) im Betrieb des Notantriebs so lange entspannt wird, bis der Endlagenschalter (29) eines Stellwegs des Stellantriebs (1) betätigt ist, und/oder dass zum Aufladen des Energiespeichers (6) wenigstens ein Angriffselement des Energiespeichers (6), an dem eine Rückstellkraft des Energiespeichers (6) angreift, entlang seines Stellwegs im Normalbetrieb verfahren wird.

## Claims

1. **Actuator (1),** comprising
- a motor (2),
- an output drive (4) which can be driven by the motor (2) and coupled to a valve, and
- an emergency drive (5) with an energy storage unit (6), by means of which the output drive (4) can be driven as an alternative to the motor (2),
- wherein the energy storage unit (6) is a pneumatic energy storage unit (7) and
- wherein the energy storage unit (6) has a pressure chamber (8) with an expandable volume,
- wherein, during operation of the emergency drive, an expansion movement of the pressure chamber (8) can be transmitted to the output drive (4),
**characterized in that**
- the energy storage unit (6) can be charged with the motor (2) by actuating the motor (2) towards an end position of the actuator (1).

2. Actuator (1) according to claim 1, **characterized in that** the or a pressure chamber (8) can be operated closed to the outside during operation.

3. Actuator (1) according to one of the preceding claims, **characterized in that** the energy storage unit (6) is connected to a monitoring device (12) which is set up to monitor an operating pressure (13) of the energy storage unit (6), and/or **in that** the energy storage unit (6) is connected to a filling device (14) which is set up to increase the or an operating pressure (13) of the energy storage unit (6) by supplying air.

4. Actuator (1) according to one of the preceding claims, **characterized in that** the energy storage unit (6) has at least one pressure chamber (8) which is delimited by at least one pot (16) and at least one piston (17) guided movably in the pot (16), in particular wherein a seal (18) is formed between the piston (17) and the pot (16), which seal divides the pressure chamber (8) by its position into two fluidically connected subchambers.

5. Actuator (1) according to one of the preceding claims, **characterized in that** one of the or two subchambers (19, 20) of the or a pressure chamber (8) is formed in the or a piston (17) and/or one of the or two subchambers (19, 20) of the or a pressure chamber (8) is formed in the or a pot (16).

6. Actuator (1) according to one of the preceding claims, **characterized in that** a further pressure chamber (23) is fluidically connected to the or a pressure chamber (8), in particular to the or a pot (16) of the or a pressure chamber (8), in particular wherein the further pressure chamber (23) encloses the pressure chamber (8) and/or the further pressure chamber (23) is bounded by an outer side (25) of the pot (16).

7. Actuator (1) according to one of the preceding claims, **characterized in that** the energy storage unit (6) has two engagement elements which can be compressed against each other and against a restoring force.

8. Actuator (1) according to one of the preceding claims, **characterized in that** the energy storage unit (6) has a spring accumulator (46).

9. Actuator (1) according to one of the preceding claims, **characterized in that** the emergency drive (5) and the motor (2) are arranged in series with respect to the output drive (4), in particular wherein the emergency drive (5) is arranged in a drive train between the motor (2) and the output drive (4), and/or **in that** the emergency drive (5) and the motor (2) are arranged in parallel with respect to the output drive (4).

10. Actuator (1) according to one of the preceding claims, **characterized in that** the emergency drive (5) and the motor (2) are coupled to one another in such a way that the torques and/or forces generated in each case are superimposed on the output drive (4), and/or **in that** the motor (2) is drive-connected to the output drive (4), in particular to a coupling point (35) of the motor (2) and the emergency drive, via a self-locking gear (31).

11. Actuator (1) according to one of the preceding claims, **characterized in that** the energy storage unit (6) has a detector with which it is possible to detect when a charged state of the energy storage unit (6) is reached.

12. Actuator (1) according to one of the preceding claims, **characterized in that** the energy storage unit (6) has a locking device (36) with which discharging of the energy storage unit (6) can be blocked.

13. Actuator (1) according to one of the preceding claims, **characterized in that** the output drive (4) is a rotatory and/or a translatory output drive (4).

14. **Method for charging an energy storage unit (6)** of an actuator (1) according to one of the preceding claims,
**characterized in that**
- the actuator (1) is moved with the motor (2) against an end stop and
- **in that** the motor (2) continues to be operated until the energy storage unit (6) is charged,
- wherein the energy storage unit (6) is charged with the motor (2) by actuating the motor (2) against an end position of the actuator (1).

15. Method according to claim 14, **characterized in that** the motor (2) is switched off when a charged state of the energy storage unit (6) is detected and/or **in that** the energy storage unit (6) is preferably automatically blocked against discharging in the charged state.

16. Method according to claim 14 or 15, **characterized in that** the energy storage unit (6) is discharged during operation of the emergency drive until the limit position switch (29) of an actuating travel of the actuator (1) is actuated, and/or **in that**, in order to charge the energy storage unit (6), at least one engaging element of the energy storage unit (6), on which a restoring force of the energy storage unit (6) engages, is moved along its actuating travel in normal operation.

## Revendications

1. **Mécanisme de commande (1)** avec
- un moteur (2),
- une sortie (4) entraînable par le moteur (2) et couplant à une vanne et
- un mécanisme d'urgence (5) avec un dispositif de stockage d'énergie (6), grâce auquel la sortie (4) est entraînable en alternative au moteur (2),
- le dispositif de stockage d'énergie (6) étant un dispositif de stockage d'énergie pneumatique (7) et
- le dispositif de stockage d'énergie (6) présentant une chambre de pression (8) avec un volume expansible,
- un mouvement d'expansion de la chambre de pression (8) étant acheminable à la sortie (4) lorsque le mécanisme d'urgence est en service, **caractérisé**
- **en ce que** le dispositif de stockage d'énergie (6) est chargeable avec le moteur (2) par actionnement du moteur (2) contre une position de fin de course du mécanisme de commande (1).

2. Mécanisme de commande (1) selon la revendication 1, **caractérisé en ce que** la ou une chambre de pression (8) est exploitable en étant fermée vers l'extérieur pendant le fonctionnement.

3. Mécanisme de commande (1) selon l'une des revendications précédentes, **caractérisé en ce que** le dispositif de stockage d'énergie (6) est relié à un dispositif de surveillance (12) qui est conçu pour surveiller une pression de service (13) du dispositif de stockage d'énergie (6) et/ou **en ce que** le dispositif de stockage d'énergie (6) est relié à un dispositif de remplissage (14) qui est conçu pour augmenter la ou une pression de service (13) du dispositif de stockage d'énergie (6) par l'amenée d'air.

4. Mécanisme de commande (1) selon l'une des revendications précédentes, **caractérisé en ce que** le dispositif de stockage d'énergie (6) présente au moins une chambre de pression (8) qui est délimitée par au moins un pot (16) et au moins un piston (17) guidé de manière mobile dans le pot (16), en particulier un joint d'étanchéité (18) étant formé entre le piston (17) et le pot (16), lequel divise la chambre de pression (8) par sa position en deux chambres partielles reliées par un fluide.

5. Mécanisme de commande (1) selon l'une des revendications précédentes, **caractérisé en ce qu'**une des ou de deux sous-chambres (19, 20) de la ou d'une chambre de pression (8) est formée dans le ou un piston (17) et/ou une des ou de deux sous-chambres (19, 20) de la ou d'une chambre de pression (8) est formée dans le ou un pot (16).

6. Mécanisme de commande (1) selon l'une des revendications précédentes, **caractérisé en ce qu'**une autre chambre de pression (23) est raccordée de manière fluidique à la ou à une chambre de pression (8), en particulier au ou à un pot (16) de la ou d'une chambre de pression (8), en particulier l'autre chambre de pression (23) entourant la chambre de pression (8) et/ou l'autre chambre de pression (23) est limitée par un côté extérieur (25) du pot (16).

7. Mécanisme de commande (1) selon l'une des revendications précédentes, **caractérisé en ce que** le dispositif de stockage d'énergie (6) a deux éléments de prise compressibles l'un contre l'autre et contre une force de rappel.

8. Mécanisme de commande (1) selon l'une des revendications précédentes, **caractérisé en ce que** le dispositif de stockage d'énergie (6) présente un dispositif de stockage à ressort (46).

9. Mécanisme de commande (1) selon l'une des revendications précédentes, **caractérisé en ce que** le mécanisme d'urgence (5) et le moteur (2) sont disposés en série par rapport à la sortie (4), en particulier le mécanisme d'urgence (5) étant disposé dans un module d'entraînement entre le moteur (2) et la sortie (4), et/ou **en ce que** le mécanisme d'urgence (5) et le moteur (2) sont disposés en parallèle par rapport à la sortie (4).

10. Mécanisme de commande (1) selon l'une des revendications précédentes, **caractérisé en ce que** le mécanisme d'urgence (5) et le moteur (2) sont couplés l'un à l'autre de telle sorte que les couples et/ou forces respectivement générés se superposent sur la sortie (4) et/ou **en ce que** le moteur (2) est relié en entraînement à la sortie (4), en particulier à un point de couplage (35) du moteur (2) et du mécanisme d'urgence, par l'intermédiaire d'un engrenage autobloquant (31).

11. Mécanisme de commande (1) selon l'une des revendications précédentes, **caractérisé en ce que** le dispositif de stockage d'énergie (6) présente un détecteur qui permet de détecter que le dispositif de stockage d'énergie (6) a atteint un état chargé.

12. Mécanisme de commande (1) selon l'une des revendications précédentes, **caractérisé en ce que** le dispositif de stockage d'énergie (6) présente un dispositif d'arrêt (36) qui permet de bloquer une décharge du dispositif de stockage d'énergie (6).

13. Mécanisme de commande (1) selon l'une des revendications précédentes, **caractérisé en ce que** la sortie (4) est une sortie rotative et/ou une sortie translatoire (4).

14. **Procédé de charge d'un dispositif de stockage d'énergie (6)** d'un mécanisme de commande (1) selon l'une des revendications précédentes, **caractérisé**
- **en ce que** le mécanisme de commande (1) est déplacé avec le moteur (2) contre une butée de fin de course et
- **en ce que** le moteur (2) continue à fonctionner jusqu'à ce que le dispositif de stockage d'énergie (6) soit chargé,
- le dispositif de stockage d'énergie (6) étant chargé avec le moteur (2) par actionnement du moteur (2) contre une position de fin de course du mécanisme de commande (1).

15. Procédé selon la revendication 14, **caractérisé en ce que** le moteur (2) est arrêté lorsqu'un état chargé du dispositif de stockage d'énergie (6) est détecté et/ou **en ce que** le dispositif de stockage d'énergie (6) est bloqué, de préférence automatiquement, à l'état chargé pour empêcher une décharge.

16. Procédé selon la revendication 14 ou 15, **caractérisé en ce que** le dispositif de stockage d'énergie (6) est détendu lors du fonctionnement du mécanisme d'urgence jusqu'à ce que l'interrupteur de fin de course (29) d'une trajectoire de commande du mécanisme de commande (1) soit actionné et/ou **en ce que**, pour charger le dispositif de stockage d'énergie (6), au moins un élément de prise du dispositif de stockage d'énergie (6), sur lequel s'applique une force de rappel du dispositif de stockage d'énergie (6), est déplacé le long de sa trajectoire de commande en fonctionnement normal.
